# EUROPEAN PATENT APPLICATION

(11) **EP 4 646 019 A1**
(43) Date of publication of application: **05.11.2025**
(21) Application number: 22969710.7
(22) Date of filing: 29.12.2022
(51) Int. Cl.: H04W 88/04, H04W 28/24

(54) **ASSISTANCE INFORMATION INTERACTION METHOD AND APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2022/143599
(87) International publication number: WO 2024/138563

(57) **Abstract**

Disclosed in embodiments of the present invention are an assistance information interaction method and apparatus. The method comprises: a first terminal acquires first assistance information; and the first terminal sends the first assistance information to a second terminal, wherein the first assistance information is used for assisting the second terminal and/or a first service network device of the second terminal in performing quality of service (QoS) allocation on a first PC5 link and a second PC5 link; the first PC5 link is a PC5 unicast link between the first terminal and the second terminal; the second PC5 link is a PC5 unicast link between the first terminal and a third terminal; and an end-to-end connection is established between the second terminal and the third terminal by means of the first terminal. By implementing the embodiments of the present invention, a node responsible for QoS allocation can acquire link conditions of two PC5 links, so that the node performs QoS allocation on the two PC5 links by using the link conditions, thereby ensuring the QoS requirement of a data stream.

## Description

### FIELD

The present invention relates to the field of wireless communication technologies, and in particular, to a method for exchanging auxiliary information and an apparatus thereof.

### BACKGROUND

To support direct communication between terminals, a sidelink (SL) communication method has been introduced, where the interface between terminals is PC-5. A terminal may not be connected to the base station directly but communicate with a base station indirectly through another terminal acting as a relay. The terminal not directly connected to the base station is referred to as a remote user equipment (remote UE), and the terminal providing relay functionality is referred to as a relay user equipment (relay UE). The remote UE and the relay UE communicate via sidelink unicast, and this architecture is referred to as a UE-to-network (U2N) relay. In another scenario, terminal A may not be connected to terminal B directly but communicate with terminal B indirectly through terminal C acting as a relay. Here, terminals A and B are remote terminals, and terminal C, which provides relay functionality, is the relay terminal. All terminals communicate via sidelink unicast, and this architecture is referred to as a UE-to-UE (U2U) relay. A direct unicast connection between terminal A and terminal B is referred to as a sidelink direct link, while an indirect unicast connection between terminal A and terminal B via a relay terminal is referred to as a sidelink indirect link.

In the U2U scenario, a source remote UE communicates with a target remote UE through a relay UE. The end-to-end quality of service (QoS) requirements for the data flow between the source remote UE and the target remote UE must be guaranteed over two PC5 links. In practical deployments, the source remote UE, relay UE, and target remote UE may belong to different networks, making it challenging for a centralized network node to obtain the link conditions of both PC5 links. Therefore, in the U2U scenario, enabling the node responsible for QoS allocation to acquire the link conditions of the two PC5 links is an urgent problem to be solved.

### SUMMARY

Embodiments of the present invention provide a method for exchanging auxiliary information and an apparatus thereof, applicable to the UE-to-UE (U2U) scenario. The method may be applied to vehicle-to-everything (V2X) communication, long-term evolution-vehicle (LTE-V) communication, vehicle-to-vehicle (V2V) communication, or other fields such as intelligent driving and intelligent connected vehicles. By exchanging auxiliary information, the node responsible for QoS allocation can obtain the link conditions of two PC5 links, thereby enabling the node to perform QoS allocation for these two PC5 links based on the link conditions and ensuring the QoS requirements of the data flow.

In a first aspect, an embodiment of the present invention provides a method for exchanging auxiliary information, performed by a first terminal. The method includes:
obtaining first auxiliary information; and
sending the first auxiliary information to a second terminal, where the first auxiliary information is used to assist the second terminal and/or a first serving network device of the second terminal in performing QoS allocation on a first PC5 link and a second PC5 link.

The first PC5 link is a PC5 unicast link between the first terminal and the second terminal, and the second PC5 link is a PC5 unicast link between the first terminal and a third terminal, and an end-to-end connection between the second terminal and the third terminal is established via the first terminal.

In this technical solution, by exchanging auxiliary information, the node responsible for QoS allocation can obtain the link conditions of the two PC5 links, thereby enabling the node to perform QoS allocation for these two PC5 links based on the link conditions and ensuring the QoS requirements of the data flow.

In an embodiment, the first auxiliary information includes at least one of:
a measurement report of SL between the first terminal and the second terminal;
a measurement report of channel busy ratio (CBR) between the first terminal and the second terminal;
a measurement report of SL between the first terminal and the third terminal;
a measurement report of CBR between the first terminal and the third terminal;
transmission delay information of the SL between the first terminal and the second terminal detected by the first terminal; or
transmission delay information of the SL between the first terminal and the third terminal detected by the first terminal.

In an embodiment, sending the first auxiliary information to the second terminal includes:
sending the first auxiliary information to the second terminal in response to receiving an auxiliary information request indication from the second terminal, where the auxiliary information request indication is used to instruct the first terminal to trigger a reporting of the auxiliary information; or
sending the first auxiliary information to the second terminal for the first time in a case where the first terminal determines that an establishment of the end-to-end connection between the second terminal and the third terminal is complete, or sending the first auxiliary information to the second terminal in a case where the first auxiliary information changes relative to first auxiliary information sent last time; or
sending the first auxiliary information to the second terminal based on an implementation of the first terminal.

In a second aspect, an embodiment of the present invention provides another method for exchanging auxiliary information, performed by a second terminal. The method includes:
receiving first auxiliary information sent by a first terminal, where the first auxiliary information is used for QoS allocation on a first PC5 link and a second PC5 link.

The first PC5 link is a PC5 unicast link between the first terminal and the second terminal, and the second PC5 link is a PC5 unicast link between the first terminal and a third terminal, and an end-to-end connection between the second terminal and the third terminal is established via the first terminal.

In this technical solution, by exchanging auxiliary information, the node responsible for QoS allocation can obtain the link conditions of the two PC5 links, thereby enabling the node to perform QoS allocation for these two PC5 links based on the link conditions and ensuring the QoS requirements of the data flow.

In an embodiment, the method further includes:
sending an auxiliary information request indication to the first terminal, where the auxiliary information request indication is used to instruct the first terminal to trigger a reporting of the auxiliary information.

In an embodiment, the method further includes: performing QoS allocation on the first PC5 link and the second PC5 link according to the first auxiliary information.

In an embodiment, the method further includes: sending the first auxiliary information to a first serving network device of the second terminal, where the first auxiliary information is used to assist the first serving network device in performing QoS allocation on the first PC5 link and the second PC5 link.

In an embodiment, the first auxiliary information includes at least one of:
a measurement report of SL between the first terminal and the second terminal;
a measurement report of CBR between the first terminal and the second terminal;
a measurement report of SL between the first terminal and the third terminal;
a measurement report of CBR between the first terminal and the third terminal;
transmission delay information of the SL between the first terminal and the second terminal detected by the first terminal; or
transmission delay information of the SL between the first terminal and the third terminal detected by the first terminal.

In a third aspect, an embodiment of the present invention provides another method for exchanging auxiliary information, performed by a first terminal. The method includes:
receiving second auxiliary information, where the second auxiliary information is sent by a second terminal or a third terminal;
the second auxiliary information is used for QoS allocation on a first PC5 link and a second PC5 link.

The first PC5 link is a PC5 unicast link between the first terminal and the second terminal, and the second PC5 link is a PC5 unicast link between the first terminal and the third terminal, and an end-to-end connection between the second terminal and the third terminal is established via the first terminal.

In an embodiment, the second auxiliary information is sent by the second terminal and includes end-to-end QoS information for one or more sidelink data radio bearers (SL-DRBs) from the second terminal to the third terminal; or the second auxiliary information is sent by the third terminal and includes end-to-end QoS information for one or more SL-DRBs from the third terminal to the second terminal.

In an embodiment, the QoS information includes at least one of: a PC5 QoS identifier (PQI); priority; packet delay budget (PDB); or packet error rate (PER).

In an embodiment, the method further includes: sending an auxiliary information request indication to the second terminal and/or the third terminal, where the auxiliary information request indication is used to instruct the second terminal and/or the third terminal to trigger a reporting of the second auxiliary information.

In an embodiment, the method further includes: performing QoS allocation on the first PC5 link and the second PC5 link according to the second auxiliary information.

In an embodiment, the method further includes: sending the second auxiliary information to a second serving network device of the first terminal, where the second auxiliary information is used to assist the second serving network device in performing QoS allocation on the first PC5 link and the second PC5 link.

In a fourth aspect, an embodiment of the present invention provides another method for exchanging auxiliary information, including:
sending second auxiliary information to a first terminal, where the second auxiliary information is used to assist the first terminal and/or a second serving network device of the first terminal in performing QoS allocation on a first PC5 link and a second PC5 link.

The first PC5 link is a PC5 unicast link between the first terminal and a second terminal, the second PC5 link is a PC5 unicast link between the first terminal and a third terminal, and an end-to-end connection between the second terminal and the third terminal is established via the first terminal.

In an embodiment, the method is performed by the second terminal, and sending the second auxiliary information to the first terminal includes:
sending the second auxiliary information to the first terminal in response to receiving an auxiliary information request indication sent by the first terminal, where the auxiliary information request indication is used to instruct the second terminal to trigger a reporting of the second auxiliary information; or
sending the second auxiliary information to the first terminal for the first time in a case where the second terminal determines that an establishment of the end-to-end connection between the second terminal and the third terminal is complete, or sending the second auxiliary information to the first terminal in a case where the second auxiliary information changes relative to second auxiliary information sent last time; or
sending the second auxiliary information to the first terminal based on an implementation of the second terminal.

In an embodiment, the second auxiliary information includes end-to-end QoS information for one or more SL-DRBs from the second terminal to the third terminal.

In an embodiment, the method is performed by the third terminal, and sending the second auxiliary information to the first terminal includes:
sending the second auxiliary information to the first terminal in response to receiving an auxiliary information request indication sent by the first terminal, where the auxiliary information request indication is used to instruct the third terminal to trigger a reporting of the second auxiliary information; or
sending the second auxiliary information to the first terminal for the first time in a case where the third terminal determines that an establishment of the end-to-end connection between the second terminal and the third terminal is complete, or sending the second auxiliary information to the first terminal in a case where the second auxiliary information changes relative to second auxiliary information sent last time; or
sending the second auxiliary information to the first terminal based on an implementation of the third terminal.

In an embodiment, the second auxiliary information includes end-to-end QoS information for one or more SL-DRBs from the third terminal to the second terminal.

In an embodiment, the QoS information includes at least one of: a PQI; priority; PDB; or PER.

In a fifth aspect, an embodiment of the present invention provides a communication apparatus, configured in a first terminal device, where the communication apparatus includes:
a processing module configured to obtain first auxiliary information;
a transceiving module configured to send the first auxiliary information to a second terminal device, where the first auxiliary information is used to assist the second terminal device and/or a first serving network device of the second terminal device in performing a Quality of Service (QoS) allocation on a first PC5 link and a second PC5 link;
the first PC5 link is a PC5 unicast link between the first terminal device and the second terminal device, the second PC5 link is a PC5 unicast link between the first terminal device and a third terminal device, and an end-to-end connection between the second terminal and the third terminal is established via the first terminal.

In a sixth aspect, an embodiment of the present invention provides another communication apparatus, configured in a second terminal device, where the communication apparatus includes:
a transceiving module configured to receive first auxiliary information sent by a first terminal device;
the first auxiliary information is used for a QoS allocation on a first PC5 link and a second PC5 link;
the first PC5 link is a PC5 unicast link between the first terminal device and the second terminal device, the second PC5 link is a PC5 unicast link between the first terminal device and a third terminal device, and an end-to-end connection between the second terminal and the third terminal is established via the first terminal.

In a seventh aspect, an embodiment of the present invention provides another communication apparatus, configured in a first terminal device, where the communication apparatus includes:
a transceiving module configured to receive second auxiliary information, where the second auxiliary information is sent by a second terminal device or a third terminal device;
the second auxiliary information is used for a QoS allocation on a first PC5 link and a second PC5 link;
the first PC5 link is a PC5 unicast link between the first terminal device and the second terminal device, the second PC5 link is a PC5 unicast link between the first terminal device and the third terminal device, and an end-to-end connection between the second terminal and the third terminal is established via the first terminal.

In an eighth aspect, an embodiment of the present invention provides another communication apparatus, where the communication apparatus includes:
a transceiving module configured to send second auxiliary information to a first terminal device, where the second auxiliary information is used to assist the first terminal device and/or a second serving network device of the first terminal device in performing a QoS allocation on a first PC5 link and a second PC5 link;
the first PC5 link is a PC5 unicast link between the first terminal device and a second terminal device, the second PC5 link is a PC5 unicast link between the first terminal device and a third terminal device, and an end-to-end connection between the second terminal and the third terminal is established via the first terminal.

In a ninth aspect, an embodiment of the present invention provides a communication apparatus, where the communication apparatus includes a processor, and when the processor invokes a computer program in a memory, the method according to the first aspect is performed.

In a tenth aspect, an embodiment of the present invention provides another communication apparatus, where the communication apparatus includes a processor, and when the processor invokes a computer program in a memory, the method according to the second aspect is performed.

In an eleventh aspect, an embodiment of the present invention provides another communication apparatus, where the communication apparatus includes a processor, and when the processor invokes a computer program in a memory, the method according to the third aspect is performed.

In a twelfth aspect, an embodiment of the present invention provides another communication apparatus, where the communication apparatus includes a processor, and when the processor invokes a computer program in a memory, the method according to the fourth aspect is performed.

In a thirteenth aspect, an embodiment of the present invention provides a communication apparatus, where the communication apparatus includes a processor and a memory, and the memory stores a computer program; the processor executes the computer program stored in the memory to cause the communication apparatus to perform the method according to the first aspect.

In a fourteenth aspect, an embodiment of the present invention provides a communication apparatus, where the communication apparatus includes a processor and a memory, and the memory stores a computer program; the processor executes the computer program stored in the memory to cause the communication apparatus to perform the method according to the second aspect.

In a fifteenth aspect, an embodiment of the present invention provides a communication apparatus, where the communication apparatus includes a processor and a memory, and the memory stores a computer program; the processor executes the computer program stored in the memory to cause the communication apparatus to perform the method according to the third aspect.

In a sixteenth aspect, an embodiment of the present invention provides a communication apparatus, where the communication apparatus includes a processor and a memory, and the memory stores a computer program; the processor executes the computer program stored in the memory to cause the communication apparatus to perform the method according to the fourth aspect.

In a seventeenth aspect, an embodiment of the present invention provides a communication apparatus, where the apparatus includes a processor and an interface circuit, the interface circuit is configured to receive a code instruction and transmit it to the processor, and the processor is configured to run the code instruction to cause the apparatus to perform the method according to the first aspect.

In an eighteenth aspect, an embodiment of the present invention provides a communication apparatus, where the apparatus includes a processor and an interface circuit, the interface circuit is configured to receive a code instruction and transmit it to the processor, and the processor is configured to run the code instruction to cause the apparatus to perform the method according to the second aspect.

In a nineteenth aspect, an embodiment of the present invention provides a communication apparatus, where the apparatus includes a processor and an interface circuit, the interface circuit is configured to receive a code instruction and transmit it to the processor, and the processor is configured to run the code instruction to cause the apparatus to perform the method according to the third aspect.

In a twentieth aspect, an embodiment of the present invention provides a communication apparatus, where the apparatus includes a processor and an interface circuit, the interface circuit is configured to receive a code instruction and transmit it to the processor, and the processor is configured to run the code instruction to cause the apparatus to perform the method according to the fourth aspect.

In a twenty-first aspect, an embodiment of the present invention provides a computer-readable storage medium, configured to store instructions for use by the terminal device, where when the instructions are executed, the terminal device is caused to perform the method according to the first aspect.

In a twenty-second aspect, an embodiment of the present invention provides a computer-readable storage medium, configured to store instructions for use by the terminal device, where when the instructions are executed, the terminal device is caused to perform the method according to the second aspect.

In a twenty-third aspect, an embodiment of the present invention provides a computer-readable storage medium, configured to store instructions for use by the terminal device, where when the instructions are executed, the terminal device is caused to perform the method according to the third aspect.

In a twenty-fourth aspect, an embodiment of the present invention provides a computer-readable storage medium, configured to store instructions for use by the terminal device, where when the instructions are executed, the terminal device is caused to perform the method according to the fourth aspect.

In a twenty-fifth aspect, the present invention further provides a computer program product including a computer program, where when the computer program product runs on a computer, the computer is caused to perform the method according to the first aspect.

In a twenty-sixth aspect, the present invention further provides a computer program product including a computer program, where when the computer program product runs on a computer, the computer is caused to perform the method according to the second aspect.

In a twenty-seventh aspect, the present invention further provides a computer program product including a computer program, where when the computer program product runs on a computer, the computer is caused to perform the method according to the third aspect.

In a twenty-eighth aspect, the present invention further provides a computer program product including a computer program, where when the computer program product runs on a computer, the computer is caused to perform the method according to the fourth aspect.

In a twenty-ninth aspect, the present invention provides a computer program, where when the computer program runs on a computer, the computer is caused to perform the method according to the first aspect.

In a thirtieth aspect, the present invention provides a computer program, where when the computer program runs on a computer, the computer is caused to perform the method according to the second aspect.

In a thirty-first aspect, the present invention provides a computer program, where when the computer program runs on a computer, the computer is caused to perform the method according to the third aspect.

In a thirty-second aspect, the present invention provides a computer program, where when the computer program runs on a computer, the computer is caused to perform the method according to the fourth aspect.

### BRIEF DESCRIPTION OF THE DRAWINGS

To describe the technical solutions in the embodiments of the present invention or the background art more clearly, the following briefly introduces the accompanying drawings required for describing the embodiments or the background art.
FIG. 1 is a schematic diagram of a communication system architecture according to an embodiment of the present invention;
FIG. 2 is a flowchart of a method for exchanging auxiliary information according to an embodiment of the present invention;
FIG. 3 is a flowchart of another method for exchanging auxiliary information according to an embodiment of the present invention;
FIG. 4 is a flowchart of another method for exchanging auxiliary information according to an embodiment of the present invention;
FIG. 5 is a flowchart of another method for exchanging auxiliary information according to an embodiment of the present invention;
FIG. 6 is a structural diagram of a communication apparatus according to an embodiment of the present invention; and
FIG. 7 is a structural diagram of another communication apparatus according to an embodiment of the present invention.

### DETAILED DESCRIPTION

The following describes the embodiments of the present invention in detail with reference to the accompanying drawings. The examples of the embodiments are illustrated in the accompanying drawings, where the same or similar reference numerals indicate the same or similar elements or elements with the same or similar functions. The embodiments described below with reference to the accompanying drawings are exemplary and are intended to explain the present invention, but should not be construed as limiting the present invention. In the description of the present invention, unless otherwise specified, "/" means "or." For example, A/B may represent A or B. The term "and/or" herein describes an association relationship between associated objects, indicating that there may be three relationships. For example, A and/or B may represent: A alone, both A and B, or B alone.

The terms used in the embodiments of the present invention are for the purpose of describing specific embodiments only and are not intended to limit the embodiments of the present invention. The singular forms "a," "an," and "the" used in the embodiments of the present invention and the appended claims are also intended to include plural forms unless the context clearly indicates otherwise.

It should be understood that although the terms "first," "second," "third," etc. may be used in the embodiments of the present invention to describe various information, these terms are not intended to limit the scope of the present invention. These terms are only used to distinguish information of the same type. For example, without departing from the scope of the embodiments of the present invention, first information may also be referred to as second information, and similarly, second information may also be referred to as first information. Depending on the context, the term "if" as used herein can be interpreted as "when", "while" or "in response to determining".

The following describes the embodiments of the present invention in detail with reference to the accompanying drawings. The examples of the embodiments are illustrated in the accompanying drawings, where the same or similar reference numerals indicate the same or similar elements.

It should be noted that, to support direct communication between terminals, a sidelink (SL) communication method has been introduced, where the interface between terminals is PC-5. According to the correspondence between the sending and receiving terminals, three transmission modes are supported on the sidelink, such as unicast, multicast, and broadcast. The sending terminal sends sidelink control information (SCI) on the physical sidelink control channel (PSCCH) and sends the second-stage SCI on the physical sidelink shared channel (PSSCH), which carries the resource location of the transmitted data and the source and destination identifiers, among other information. For data packets with hybrid automatic repeat request (HARQ) feedback enabled, the receiving terminal provides HARQ-ACK (hybrid automatic repeat request acknowledgment) feedback for the PSSCH on the physical sidelink feedback channel (PSFCH).

There are two resource allocation methods for sidelink communication: one is network dynamic scheduling (resource allocation mode 1), and the other is autonomous resource selection by the terminal in a resource pool (resource allocation mode 2). Dynamic scheduling involves the network dynamically allocating sidelink transmission resources to the terminal based on its buffer data reporting, while autonomous selection involves the terminal randomly selecting transmission resources from a resource pool broadcast or preconfigured by the network. The network device may configure multiple resource pools for the terminal in one bandwidth part (BWP). The specific allocation method is configured by the network device through radio resource control (RRC) signaling.

A terminal may communicate with a base station indirectly through another terminal acting as a relay. In this scenario, the terminal not directly connected to the base station is referred to as a remote UE, and the terminal providing relay functionality is referred to as a relay UE. The remote UE and the relay UE communicate via sidelink unicast, and this architecture is referred to as UE-to-network (U2N) relay. In another scenario, terminal A may communicate with terminal B indirectly through terminal C acting as a relay. Here, terminals A and B are remote UEs, and terminal C, which provides relay functionality, is the relay UE. All terminals communicate via sidelink unicast, and this architecture is referred to as UE-to-UE (U2U) relay. A direct unicast connection between terminal A and terminal B is referred to as a sidelink direct link, while an indirect unicast connection between terminal A and terminal B via a relay terminal is referred to as a sidelink indirect link.

In the U2N scenario, the remote UE communicates with the base station for uplink and downlink data transmission through the relay UE. From the network perspective, the network can obtain the link conditions of the Uu link between the network and the relay UE and the PC5 link between the relay UE and the remote UE. The Uu link conditions between the network and the relay UE can be obtained through Uu measurement reports reported by the relay UE, while the PC5 link conditions between the relay UE and the remote UE can be obtained through measurement reports reported by the remote UE. Additionally, in the U2N scenario, the resources of the Uu link and the PC5 link are scheduled by the network and are fully controlled by the network. In 5G systems, the main indicators reflecting Quality of Service (QoS) are SQI/PQI. According to the mapping table, every SQI/PQI are associated with different priorities, PDBs, and PERs, etc.

In the U2N scenario, to guarantee the QoS requirements of a data flow (radio bearer), especially to meet the PDB delay budget, the network needs to consider the link conditions of the Uu and PC5 links and configure the Uu and PC5 links reasonably to meet the end-to-end QoS requirements of the data flow. The specific implementation of how to configure the end-to-end QoS requirements is left to the network.

In the U2U scenario, the source remote UE communicates with the target remote UE through the relay UE. The end-to-end QoS requirements of the data flow between the source remote UE and the target remote UE must be guaranteed over two PC5 links. The first PC5 link is between the source remote UE and the relay UE, and the second PC5 link is between the relay UE and the target remote UE. For PDB, the sum of the PDBs of the two PC5 links must be less than or equal to the end-to-end PDB requirement. In practical deployments, the source remote UE, relay UE, and target remote UE may belong to different networks, making it challenging for a centralized network node to obtain the link conditions of both PC5 links. Therefore, in the U2U scenario, enabling the node responsible for QoS allocation to acquire the link conditions of the two PC5 links is an urgent problem to be solved.

To address this, the embodiments of the present invention provide a method for exchanging auxiliary information and an apparatus thereof. By exchanging auxiliary information, the node responsible for QoS allocation can obtain the link conditions of the two PC5 links, thereby enabling the node to perform QoS allocation for these two PC5 links based on the link conditions and ensuring the QoS requirements of the data flow.

To better understand the method for exchanging auxiliary information disclosed in the embodiments of the present invention, the communication system applicable to the embodiments of the present invention is first described below.

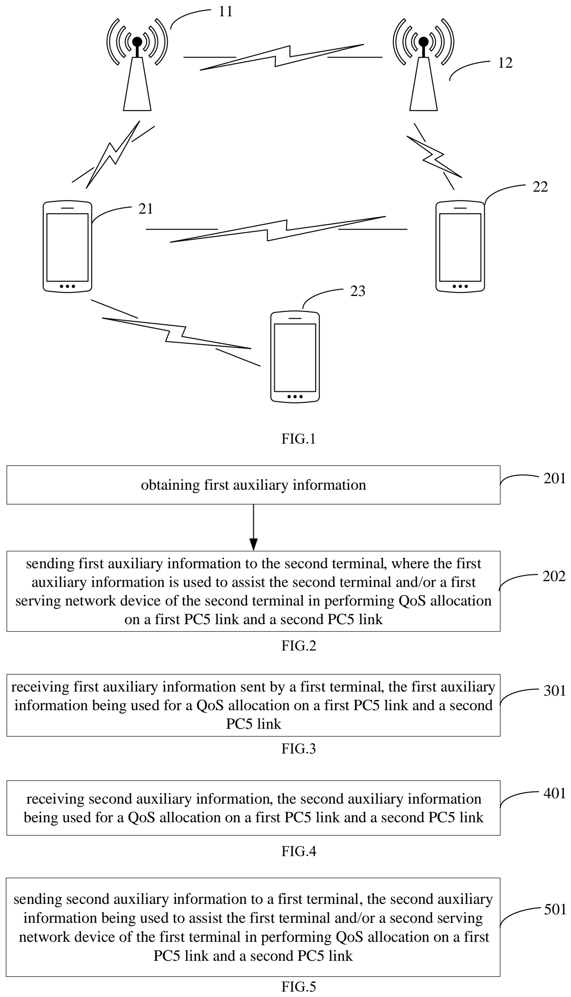

Please refer to FIG. 1, which is a schematic diagram of a communication system architecture according to an embodiment of the present invention. The communication system may include, but is not limited to, three terminals and two network devices. The terminals are connected via sidelink. The number and form of devices shown in FIG. 1 are for illustration only and do not limit the embodiments of the present invention. In practice, the system may include three or more terminals and two or more network devices. The communication system shown in FIG. 1 includes two network devices 11 and 12 and three terminals 21, 22, and 23. The terminals 21, 22, and 23 are connected via sidelink. For example, terminal 21 and terminal 22 communicate via a PC5 unicast link, terminal 21 and terminal 23 communicate via a PC5 unicast link, and terminals 22 and 23 establish an end-to-end connection through terminal 21. Network device 11 is the serving network device of terminal 21, and network device 12 is the serving network device of terminal 22.

It should be noted that the technical solutions of the embodiments of the present invention can be applied to various communication systems, such as long-term evolution (LTE) systems, fifth-generation (5G) mobile communication systems, 5G new radio (NR) systems, or other future mobile communication systems. The sidelink in the embodiments of the present invention may also be referred to as a side link or direct link.

The network device in the embodiments of the present invention is an entity on the network side for transmitting or receiving signals. For example, the network device may be an evolved NodeB (eNB), a transmission reception point (TRP), a next-generation NodeB (gNB) in an NR system, a base station in other future mobile communication systems, or an access node in a wireless fidelity (WiFi) system. The specific technology and form of the network device are not limited in the embodiments of the present invention. The network device provided in the embodiments of the present invention may consist of a central unit (CU) and a distributed unit (DU). The CU may also be referred to as a control unit. The CU-DU structure splits the protocol layers of the network device (e.g., a base station), with some protocol layer functions centrally controlled by the CU and the remaining or all protocol layer functions distributed in the DU and centrally controlled by the CU.

The terminal in the embodiments of the present invention is an entity on the user side for receiving or transmitting signals, such as a mobile phone. The terminal may also be referred to as a terminal, user equipment (UE), mobile station (MS), mobile terminal (MT), etc. The terminal may be a car with communication capabilities, a smart car, a mobile phone, a wearable device, a tablet (Pad), a computer with wireless transceiver capabilities, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, etc. The specific technology and form of the terminal are not limited in the embodiments of the present invention.

It should be understood that the communication system described in the embodiments of the present invention is intended to illustrate the technical solutions of the embodiments more clearly and does not limit the technical solutions provided in the embodiments. Those skilled in the art will understand that the technical solutions provided in the embodiments are equally applicable to similar technical problems as the system architecture evolves and new service scenarios emerge.

The following describes the method for exchanging auxiliary information and the apparatus thereof provided in the present invention in detail with reference to the drawings.

Please refer to FIG. 2, which is a flowchart of a method for exchanging auxiliary information according to an embodiment of the present invention. It should be noted that the method may be performed by a first terminal. As an example, the first terminal may be a relay UE in a U2U scenario. As shown in FIG. 2, the method may include, but is not limited to, the following steps:

In step 201, first auxiliary information is obtained.

In the embodiments of the present invention, the first auxiliary information may include at least one of the following:
1) a measurement report of SL between the first terminal and the second terminal;
2) a measurement report of channel busy ratio (CBR) between the first terminal and the second terminal;
3) a measurement report of SL between the first terminal and the third terminal;
4) a measurement report of CBR between the first terminal and the third terminal;
5) transmission delay information of SL between the first terminal and the second terminal detected by the first terminal;
6) transmission delay information of SL between the first terminal and the third terminal detected by the first terminal.

It should be noted that in the embodiments of the present invention, the first terminal is a relay UE in the U2U scenario, the second terminal is a source remote UE in the U2U scenario, and the third terminal may be a target remote UE in the U2U scenario. Alternatively, the first terminal is a relay UE in the U2U scenario, the second terminal is a target remote UE in the U2U scenario, and the third terminal is a source remote UE in the U2U scenario.

In step 202, the first auxiliary information is sent to the second terminal, where the first auxiliary information is used to assist the second terminal and/or a first serving network device of the second terminal in performing QoS allocation on a first PC5 link and a second PC5 link.

In the embodiments of the present invention, the first PC5 link is a PC5 unicast link between the first terminal and the second terminal, and the second PC5 link is a PC5 unicast link between the first terminal and the third terminal, and an end-to-end connection between the second terminal and the third terminal is established via the first terminal.

As an example, the relay UE may report the first auxiliary information to the sending UE. The first auxiliary information may assist the sending UE and/or the serving network device (e.g., a serving gNB) of the sending UE in performing QoS allocation on the first PC5 link and the second PC5 link.

It should be noted that in the embodiments of the present invention, the second terminal may be a source remote UE or a target remote UE. If the direction of the data flow is from the source remote UE to the target remote UE, the second terminal may be the sending UE (i.e., the source remote UE), and the third terminal may be the receiving UE (i.e., the target remote UE). If the direction of the data flow is from the target remote UE to the source remote UE, the second terminal may be the sending UE (i.e., the target remote UE), and the third terminal may be the receiving UE (i.e., the source remote UE).

In an embodiment, the first terminal may send the first auxiliary information to the second terminal in response to receiving an auxiliary information request indication from the second terminal, where the auxiliary information request indication is used to instruct the first terminal to trigger a reporting of the auxiliary information.

Optionally, the sending of the first auxiliary information may be triggered with a request. For example, when the first terminal receives the auxiliary information request indication from the second terminal, the first terminal triggers the sending of the first auxiliary information. As an example, the auxiliary information request indication may be a 1-bit indication carried by PC5-RRC signaling or an indication carried by a PC5 MAC CE, which is not limited in the present invention.

In another embodiment, the first terminal may send the first auxiliary information to the second terminal for the first time in a case where the first terminal determines that that an establishment of the end-to-end connection between the second terminal and the third terminal is complete, or sending the first auxiliary information to the second terminal in a case where the first auxiliary information changes relative to first auxiliary information sent last time.

In other words, the first auxiliary information may also be triggered without a request, the first terminal may send the first auxiliary information to the second terminal in a case where the first auxiliary information changes relative to first auxiliary information sent last time or the first auxiliary information is sent for the first time after an establishment of an end-to-end connection between the second terminal and the third terminal is complete, if no first auxiliary information has been reported before.

In another embodiment, the first terminal may send the first auxiliary information to the second terminal based on the first terminal's implementation. In other words, the triggering of the first auxiliary information reporting may be left to the implementation of the first terminal.

In some embodiments of the present invention, after receiving the first auxiliary information sent by the first terminal, the second terminal may perform QoS allocation on the first PC5 link and the second PC5 link based on the first auxiliary information, ensuring that the configurations of the two PC5 links meet the end-to-end QoS requirements of the data flow. For example, for PDB, the sum of the PDBs of the two PC5 links must be less than or equal to the end-to-end PDB requirement of the data flow.

In other embodiments of the present invention, the second terminal in an RRC connected state may send the received first auxiliary information to its first serving network device. The first serving network device may perform QoS allocation on the first PC5 link and the second PC5 link based on the first auxiliary information, ensuring that the configurations of the two PC5 links meet the end-to-end QoS requirements of the data flow. For example, for PDB, the sum of the PDBs of the two PC5 links must be less than or equal to the end-to-end PDB requirement of the data flow.

By implementing the embodiments of the present invention, the node responsible for QoS allocation can obtain the link conditions of the two PC5 links through the interaction of auxiliary information, thereby enabling the node to perform QoS allocation for these two PC5 links based on the link conditions and ensuring the end-to-end QoS requirements of the data flow.

Please refer to FIG. 3, which is a flowchart of another method for exchanging auxiliary information according to an embodiment of the present invention. It should be noted that the method may be performed by a second terminal. As an example, the second terminal may be a sending UE, such as a source remote UE or a target remote UE in the U2U scenario. As shown in FIG. 3, the method may include, but is not limited to, the following steps:

In step 301, first auxiliary information sent by a first terminal is received.

In the embodiments of the present invention, the first auxiliary information may include at least one of the following:
a measurement report of sidelink (SL) between the first terminal and the second terminal;
a measurement report of channel busy ratio (CBR) between the first terminal and the second terminal;
a measurement report of SL between the first terminal and the third terminal;
a measurement report of CBR between the first terminal and the third terminal;
transmission delay information of SL between the first terminal and the second terminal detected by the first terminal; or
transmission delay information of SL between the first terminal and the third terminal detected by the first terminal.

It should be noted that in the embodiments of the present invention, the first terminal is a relay UE in the U2U scenario, the second terminal is a source remote UE in the U2U scenario, and the third terminal may be a target remote UE in the U2U scenario. Alternatively, the first terminal is a relay UE in the U2U scenario, the second terminal is a target remote UE in the U2U scenario, and the third terminal is a source remote UE in the U2U scenario.

In an embodiment, the second terminal may be a source remote UE or a target remote UE. If the direction of the data flow is from the source remote UE to the target remote UE, the second terminal may be the sending UE (i.e., the source remote UE), and the third terminal may be the receiving UE (i.e., the target remote UE). If the direction of the data flow is from the target remote UE to the source remote UE, the second terminal may be the sending UE (i.e., the target remote UE), and the third terminal may be the receiving UE (i.e., the source remote UE).

Optionally, the sending of the first auxiliary information may be request-triggered. In some embodiments of the present invention, the second terminal may send an auxiliary information request indication to the first terminal, where the auxiliary information request indication is used to instruct the first terminal to trigger a reporting of the auxiliary information. For example, when the first terminal receives the auxiliary information request indication from the second terminal, the first terminal triggers the sending of the first auxiliary information. The second terminal may then receive the first auxiliary information sent by the first terminal. As an example, the auxiliary information request indication may be a 1-bit indication carried by PC5-RRC signaling or an indication carried by a PC5 MAC CE, which is not limited in the present invention.

In the embodiments of the present invention, the first auxiliary information is used for QoS allocation on a first PC5 link and a second PC5 link.

In the embodiments of the present invention, the first PC5 link is a PC5 unicast link between the first terminal and the second terminal, and the second PC5 link is a PC5 unicast link between the first terminal and the third terminal, and an end-to-end connection between the second terminal and the third terminal is established via the first terminal.

In an embodiment, the second terminal may perform QoS allocation on the first PC5 link and the second PC5 link based on the first auxiliary information, ensuring that the configurations of the two PC5 links meet the end-to-end QoS requirements of the data flow. For example, for PDB, the sum of the PDBs of the two PC5 links must be less than or equal to the end-to-end PDB requirement.

In another embodiment, the second terminal may send the received first auxiliary information to the second terminal's first serving network device, where the first auxiliary information is used to assist the first serving network device in performing QoS allocation on the first PC5 link and the second PC5 link.

As an example, the second terminal in an RRC connected state may report the first auxiliary information received from the first terminal to the second terminal's serving gNB. The first auxiliary information may assist the serving gNB in performing QoS allocation on the first PC5 link and the second PC5 link. As another example, the second terminal operating in mode 1 (i.e., resource allocation mode 1) may report the first auxiliary information received from the first terminal to the second terminal's serving gNB. The first auxiliary information may assist the serving gNB in performing QoS allocation on the first PC5 link and the second PC5 link, ensuring that the configurations of the two PC5 links meet the end-to-end QoS requirements of the data flow. For example, for PDB, the sum of the PDBs of the two PC5 links must be less than or equal to the end-to-end PDB requirement of the data flow.

By implementing the embodiments of the present invention, the node responsible for QoS allocation can obtain the link conditions of the two PC5 links through the interaction of auxiliary information, thereby enabling the node to perform QoS allocation for these two PC5 links based on the link conditions and ensuring the end-to-end QoS requirements of the data flow.

Please refer to FIG. 4, which is a flowchart of another method for exchanging auxiliary information according to an embodiment of the present invention. It should be noted that the method may be performed by a first terminal. As an example, the first terminal may be a relay UE in the U2U scenario. As shown in FIG. 4, the method may include, but is not limited to, the following steps:
In step 401, second auxiliary information is received.

In the embodiments of the present invention, the second auxiliary information is sent by a second terminal or a third terminal.

In an embodiment, the second auxiliary information is sent by the second terminal, the second auxiliary information may include, but is not limited to, end-to-end QoS information for one or more SL-DRBs from the second terminal to the third terminal.

In another implementation, if the second auxiliary information is sent by the third terminal, the second auxiliary information may include, but is not limited to, end-to-end QoS information for one or more SL-DRBs from the third terminal to the second terminal.

In the embodiments of the present invention, the QoS information may include, but is not limited to, at least one of the following: PQI (PC5 QoS identifier); Priority; PDB (packet delay budget); or PER (packet error rate), etc.

Optionally, the sending of the second auxiliary information may be request-triggered. In some embodiments of the present invention, the first terminal may send an auxiliary information request indication to the second terminal and/or the third terminal, where the auxiliary information request indication is used to instruct the second terminal and/or the third terminal to trigger a reporting of the second auxiliary information. For example, when the second terminal receives the auxiliary information request indication from the first terminal, the second terminal triggers the sending of the second auxiliary information. The first terminal may then receive the second auxiliary information sent by the second terminal. Similarly, when the third terminal receives the auxiliary information request indication from the first terminal, the third terminal triggers the sending of the second auxiliary information. The first terminal may then receive the second auxiliary information sent by the third terminal. As an example, the auxiliary information request indication may be a 1-bit indication carried by PC5-RRC signaling or an indication carried by a PC5 MAC CE, which is not limited in the present invention.

In the embodiments of the present invention, the second auxiliary information is used for QoS allocation on a first PC5 link and a second PC5 link.

In the embodiments of the present invention, the first PC5 link is a PC5 unicast link between a first terminal and a second terminal, and the second PC5 link is a PC5 unicast link between the first terminal and a third terminal, and an end-to-end connection between the second terminal and the third terminal is established via the first terminal.

In an embodiment, the first terminal may perform QoS allocation on the first PC5 link and the second PC5 link according to the second auxiliary information, so that the configurations of the two PC5 links meet the end-to-end QoS requirements of the data flow. For example, for Packet Delay Budget (PDB), the sum of the PDBs of the two PC5 links must be less than or equal to the end-to-end PDB requirement of the data flow.

In another embodiment, the first terminal may send the second auxiliary information to a second serving network device (e.g., a serving gNB) of the first terminal; where the second auxiliary information is used to assist the second serving network device in performing QoS allocation on the first PC5 link and the second PC5 link.

As an example, a first terminal in an RRC connected state may report the second auxiliary information received from the second terminal and/or the third terminal to the serving gNB of the first terminal. The second auxiliary information may assist the serving gNB in performing QoS allocation on the first PC5 link and the second PC5 link. As another example, a first terminal operating in model may report the second auxiliary information received from the second terminal and/or the third terminal to the serving gNB of the first terminal. The second auxiliary information may assist the serving gNB in performing QoS allocation on the first PC5 link and the second PC5 link, ensuring that the configurations of the two PC5 links meet the end-to-end QoS requirements of the data flow. For example, for PDB, the sum of the PDBs of the two PC5 links must be less than or equal to the end-to-end PDB requirement of the data flow.

By implementing the embodiments of the present invention, through the interaction of auxiliary information, the node responsible for QoS allocation can obtain the link conditions of the two PC5 links, thereby enabling the node to perform QoS allocation on these two PC5 links based on the link conditions, ensuring the end-to-end QoS requirements of the data flow.

Please refer to FIG. 5. FIG. 5 is a schematic flowchart of another method for exchanging auxiliary information according to an embodiment of the present invention. As shown in FIG. 5, the method may include but is not limited to the following steps:
In step 501, second auxiliary information is sent to a first terminal; where the second auxiliary information is used to assist the first terminal and/or a second serving network device of the first terminal in performing QoS allocation on a first PC5 link and a second PC5 link.

In the embodiments of the present invention, the first PC5 link is a PC5 unicast link between the first terminal and a second terminal, and the second PC5 link is a PC5 unicast link between the first terminal and a third terminal, and an end-to-end connection between the second terminal and the third terminal is established via the first terminal. As an example, the first terminal may be a relay UE in a U2U scenario, the second terminal may be a source remote UE in the U2U scenario, and the third terminal may be a target remote UE in the U2U scenario. Alternatively, the first terminal may be a relay UE in the U2U scenario, the second terminal may be a target remote UE in the U2U scenario, and the third terminal may be a source remote UE in the U2U scenario.

In the embodiments of the present invention, the method may be performed by the second terminal. For example, step 501 is performed by the second terminal, i.e., the second terminal sends the second auxiliary information to the first terminal.

In an embodiment, the second terminal sends the second auxiliary information to the first terminal in response to receiving an auxiliary information request indication sent by the first terminal; where the auxiliary information request indication is used to instruct the second terminal to trigger a reporting of the second auxiliary information.

Optionally, the sending of the second auxiliary information may be request-triggered. For example, upon receiving the auxiliary information request indication sent by the first terminal, the second terminal triggers the sending of the second auxiliary information. As an example, the auxiliary information request indication may be a 1-bit indication carried by PC5-RRC signaling or an indication carried by a PC5 MAC CE, which is not limited in the present invention.

In another embodiment, the second terminal sends the second auxiliary information to the first terminal for the first time in a case where the second terminal determines that an establishment of the end-to-end connection between the second terminal and the third terminal is complete, or sends the second auxiliary information to the first terminal in a case where the second auxiliary information changes relative to second auxiliary information sent last time.

That is, the second auxiliary information may also be triggered without a request. For example, it may be triggered in a case where the second auxiliary information changes relative to second auxiliary information sent last time, or the second terminal may send the second auxiliary information to the first terminal for the first time after an establishment of the end-to-end connection between the second terminal and the third terminal is complete, if no second auxiliary information has been reported before.

In another embodiment, based on the implementation of the second terminal, the second terminal sends the second auxiliary information to the first terminal. That is, the triggering of the reporting of the second auxiliary information may be left to the implementation of the second terminal.

In this embodiment, the second auxiliary information may include but is not limited to: end-to-end QoS information for one or more SL-DRBs sent from the second terminal to the third terminal. Where, in the embodiments of the present invention, the QoS information may include but is not limited to at least one of the following: 1) PC5 QoS Identifier (PQI); 2) priority; 3) Packet Delay Budget (PDB); or 4) Packet Error Rate (PER), etc.

Optionally, in the embodiments of the present invention, the method may be performed by the third terminal. For example, step 501 is performed by the third terminal, i.e., the third terminal sends the second auxiliary information to the first terminal.

In an embodiment, the third terminal sends the second auxiliary information to the first terminal in response to receiving an auxiliary information request indication sent by the first terminal; where the auxiliary information request indication is used to instruct the third terminal to trigger a reporting of the second auxiliary information.

Optionally, the sending of the second auxiliary information may be request-triggered. For example, upon receiving the auxiliary information request indication sent by the first terminal, the third terminal triggers the sending of the second auxiliary information. As an example, the auxiliary information request indication may be a 1-bit indication carried by PC5-RRC signaling or an indication carried by a PC5 MAC CE, which is not limited in the present invention.

In another embodiment, the third terminal sends the second auxiliary information to the first terminal for the first time in a case where the third terminal determines that an establishment of the end-to-end connection between the second terminal and the third terminal is complete, or sends the second auxiliary information to the first terminal in a case where the second auxiliary information changes relative to second auxiliary information sent last time.

That is, the second auxiliary information may also be triggered without a request. For example, it may be triggered in a case where the second auxiliary information changes relative to the second auxiliary information sent last time, or the third terminal may send the second auxiliary information to the first terminal for the first time after an establishment of the end-to-end connection between the second terminal and the third terminal is complete, if no second auxiliary information has been reported before.

In another embodiment, based on the implementation of the third terminal, the third terminal sends the second auxiliary information to the first terminal. That is, the triggering of the reporting of the second auxiliary information may be left to the implementation of the third terminal.

In this embodiment, the second auxiliary information may include but is not limited to: end-to-end QoS information for one or more SL-DRBs sent from the third terminal to the second terminal. Where, in the embodiments of the present invention, the QoS information may include but is not limited to at least one of the following: 1) PC5 QoS Identifier (PQI); 2) priority; 3) Packet Delay Budget (PDB); or 4) Packet Error Rate (PER), etc.

By implementing the embodiments of the present invention, through the interaction of auxiliary information, the node responsible for QoS allocation can obtain the link conditions of the two PC5 links, thereby enabling the node to perform QoS allocation on these two PC5 links based on the link conditions, ensuring the end-to-end QoS requirements of the data flow.

In the embodiments provided by the present invention, the methods are introduced from the perspective of terminals. To implement the functions described in the methods provided by the embodiments of the present invention, the terminals may include hardware structures, software modules, or a combination of hardware structures and software modules to achieve the above functions. A specific function among the above functions may be executed by a hardware structure, a software module, or a combination of hardware structure and software module.

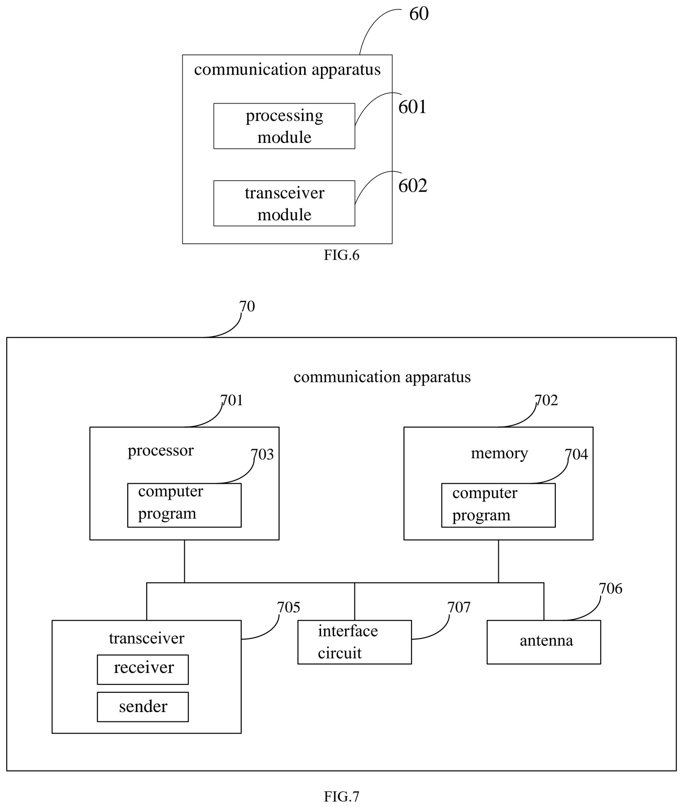

Please refer to FIG. 6, which is a schematic structural diagram of a communication apparatus 60 according to an embodiment of the present invention. The communication apparatus 60 shown in FIG. 6 may include a processing module 601 and a transceiver module 602. The transceiver module 602 may include a sending module and/or a receiving module. The sending module is used to implement sending functions, and the receiving module is used to implement receiving functions. The transceiver module 602 may implement sending and/or receiving functions.

The communication apparatus 60 may be a terminal, an apparatus in a terminal, or an apparatus that can be used in conjunction with a terminal.

The communication apparatus 60 is a terminal (e.g., the first terminal described in the embodiment of FIG. 2). The processing module 601 is configured to obtain first auxiliary information. The transceiver module 602 is configured to send the first auxiliary information to a second terminal, where the first auxiliary information is used to assist the second terminal and/or a first serving network device of the second terminal in performing QoS allocation on a first PC5 link and a second PC5 link. The first PC5 link is a PC5 unicast link between the first terminal and the second terminal, the second PC5 link is a PC5 unicast link between the first terminal and a third terminal, and an end-to-end connection between the second terminal and the third terminal is established via the first terminal.

In an embodiment, the first auxiliary information includes at least one of: a measurement report of SL between the first terminal and the second terminal; a measurement report of CBR between the first terminal and the second terminal; a measurement report of SL between the first terminal and the third terminal; a measurement report of CBR between the first terminal and the third terminal; transmission delay information of the SL between the first terminal and the second terminal detected by the first terminal; or transmission delay information of the SL between the first terminal and the third terminal detected by the first terminal.

In an embodiment, the transceiver module 602 is further configured to: send the first auxiliary information to the second terminal in response to receiving an auxiliary information request indication from the second terminal, where the auxiliary information request indication is used to instruct the first terminal to trigger a reporting of the auxiliary information; or send the first auxiliary information for the first time in a case where the first terminal determines that an establishment of the end-to-end connection between the second terminal and the third terminal is complete, or send the first auxiliary information to the second terminal in a case where the first auxiliary information changes relative to first auxiliary information sent last time; or send the first auxiliary information to the second terminal based on an implementation of the first terminal.

The communication apparatus 60 is a terminal (e.g., the second terminal described in the embodiment of FIG. 3). The transceiver module 602 is configured to receive first auxiliary information sent by a first terminal. The first auxiliary information is used for QoS allocation on a first PC5 link and a second PC5 link. The first PC5 link is a PC5 unicast link between the first terminal and the second terminal, the second PC5 link is a PC5 unicast link between the first terminal and a third terminal, and an end-to-end connection between the second terminal and the third terminal is established via the first terminal.

In an embodiment, the transceiver module 602 is further configured to send an auxiliary information request indication to the first terminal, where the auxiliary information request indication is used to instruct the first terminal to trigger a reporting of the auxiliary information.

In an embodiment, the processing module 601 is further configured to perform QoS allocation on the first PC5 link and the second PC5 link according to the first auxiliary information.

In an embodiment, the transceiver module 602 is further configured to send the first auxiliary information to a first serving network device of the second terminal, where the first auxiliary information is used to assist the first serving network device in performing QoS allocation on the first PC5 link and the second PC5 link.

In an embodiment, the first auxiliary information includes at least one of: a measurement report of SL between the first terminal and the second terminal; a measurement report of CBR between the first terminal and the second terminal; a measurement report of SL between the first terminal and the third terminal; a measurement report of CBR between the first terminal and the third terminal; transmission delay information of the SL between the first terminal and the second terminal detected by the first terminal; or transmission delay information of the SL between the first terminal and the third terminal detected by the first terminal.

The communication apparatus 60 is a terminal (e.g., the first terminal described in the embodiment of FIG. 4). The transceiver module 602 is configured to receive second auxiliary information, where the second auxiliary information is sent by a second terminal or a third terminal. The second auxiliary information is used for QoS allocation on a first PC5 link and a second PC5 link. The first PC5 link is a PC5 unicast link between the first terminal and the second terminal, the second PC5 link is a PC5 unicast link between the first terminal and the third terminal, and an end-to-end connection between the second terminal and the third terminal is established via the first terminal.

In an embodiment, the second auxiliary information is sent by the second terminal, and the second auxiliary information includes: end-to-end QoS information for one or more sidelink data radio bearers (SL-DRBs) from the second terminal to the third terminal. The second auxiliary information is sent by the third terminal, and the second auxiliary information includes: end-to-end QoS information for one or more SL-DRBs from the third terminal to the second terminal.

In an embodiment, the QoS information includes at least one of: PC5 QoS Identifier (PQI); priority; Packet Delay Budget (PDB); or Packet Error Rate (PER), etc.

In an embodiment, the transceiver module 602 is further configured to send an auxiliary information request indication to the second terminal and/or the third terminal, where the auxiliary information request indication is used to instruct the second terminal and/or the third terminal to trigger a reporting of the second auxiliary information.

In an embodiment, the processing module 601 is further configured to perform QoS allocation on the first PC5 link and the second PC5 link according to the second auxiliary information.

In an embodiment, the transceiver module 602 is further configured to send the second auxiliary information to a second serving network device of the first terminal, where the second auxiliary information is used to assist the second serving network device in performing QoS allocation on the first PC5 link and the second PC5 link.

The communication apparatus 60 is a terminal (e.g., the second terminal described in the embodiment of FIG. 5). The transceiver module 602 is configured to send second auxiliary information to a first terminal, where the second auxiliary information is used to assist the first terminal and/or a second serving network device of the first terminal in performing QoS allocation on a first PC5 link and a second PC5 link. The first PC5 link is a PC5 unicast link between the first terminal and the second terminal, the second PC5 link is a PC5 unicast link between the first terminal and a third terminal, and an end-to-end connection between the second terminal and the third terminal is established via the first terminal.

In an embodiment, the transceiver module 602 is further configured to send the second auxiliary information to the first terminal in response to receiving an auxiliary information request indication sent by the first terminal, where the auxiliary information request indication is used to instruct the second terminal to trigger a reporting of the second auxiliary information; or send the second auxiliary information to the first terminal for the first time in a case where the second terminal determines that an establishment of the end-to-end connection between the second terminal and the third terminal is complete, or send the second auxiliary information to the first terminal in a case where the second auxiliary information changes relative to second auxiliary information sent last time; or send the second auxiliary information to the first terminal based on an implementation of the second terminal.

In an embodiment, the second auxiliary information includes: end-to-end QoS information for one or more SL-DRBs from the second terminal to the third terminal. In an embodiment, the QoS information includes at least one of: PC5 QoS Identifier (PQI); priority; Packet Delay Budget (PDB); or Packet Error Rate (PER).

The communication apparatus 60 is a terminal (e.g., the third terminal described in the embodiment of FIG. 5). The transceiver module 602 is configured to send second auxiliary information to a first terminal, where the second auxiliary information is used to assist the first terminal and/or a second serving network device of the first terminal in performing QoS allocation on a first PC5 link and a second PC5 link. The first PC5 link is a PC5 unicast link between the first terminal and the second terminal, the second PC5 link is a PC5 unicast link between the first terminal and the third terminal, and an end-to-end connection between the second terminal and the third terminal is established via the first terminal.

In an embodiment, the transceiver module 602 is further configured to: send the second auxiliary information to the first terminal in response to receiving an auxiliary information request indication sent by the first terminal, where the auxiliary information request indication is used to instruct the third terminal to trigger a reporting of the second auxiliary information; or send the second auxiliary information to the first terminal for the first time in a case where the third terminal determines that an establishment of the end-to-end connection between the second terminal and the third terminal is complete, or send the second auxiliary information to the first terminal in a case where the second auxiliary information changes relative to second auxiliary information sent last time; or send the second auxiliary information to the first terminal based on an implementation of the third terminal.

In an embodiment, the second auxiliary information includes: end-to-end QoS information for one or more SL-DRBs from the third terminal to the second terminal. In an embodiment, the QoS information includes at least one of: PC5 QoS Identifier (PQI); priority; Packet Delay Budget (PDB); or Packet Error Rate (PER).

Regarding the apparatus in the above embodiments, the specific manner in which each module performs operations has been described in detail in the embodiments related to the method, and will not be elaborated here.

Please refer to FIG. 7, which is a schematic structural diagram of another communication apparatus 70 according to an embodiment of the present invention. The communication apparatus 70 may be a terminal, a chip, a chip system, or a processor that supports a terminal in implementing the above methods. The apparatus may be used to implement the methods described in the above method embodiments. For details, refer to the descriptions in the above method embodiments.

The communication apparatus 70 may include one or more processors 701. The processor 701 may be a general-purpose processor or a special-purpose processor, such as a baseband processor or a central processing unit. The baseband processor may be used to process communication protocols and communication data, and the central processing unit may be used to control the communication apparatus (e.g., a base station, a baseband chip, a terminal, a terminal chip, a DU, or a CU), execute computer programs, and process data of the computer programs.

Optionally, the communication apparatus 70 may further include one or more memories 702, on which a computer program 704 may be stored. The processor 701 executes the computer program 704 to cause the communication apparatus 70 to perform the methods described in the above method embodiments. Optionally, the memory 702 may further store data. The communication apparatus 70 and the memory 702 may be separately configured or integrated together.

Optionally, the communication apparatus 70 may further include a transceiver 705 and an antenna 706. The transceiver 705 may be referred to as a transceiver unit, a transceiver machine, or a transceiver circuit, and is used to implement transceiver functions. The transceiver 705 may include a receiver and a transmitter. The receiver may be referred to as a receiver machine or a receiver circuit, and is used to implement receiving functions. The transmitter may be referred to as a transmitter machine or a transmitter circuit, and is used to implement sending functions.

Optionally, the communication apparatus 70 may further include one or more interface circuits 707. The interface circuit 707 is used to receive code instructions and transmit them to the processor 701. The processor 701 runs the code instructions to cause the communication apparatus 70 to perform the methods described in the above method embodiments.

The communication apparatus 70 is a terminal. The processor 701 is configured to perform step 201 in FIG. 2. The transceiver 705 is configured to perform step 202 in FIG. 2; step 301 in FIG. 3; step 401 in FIG. 4; or step 501 in FIG. 5.

In an embodiment, the processor 701 may include a transceiver for implementing receiving and sending functions. For example, the transceiver may be a transceiver circuit, an interface, or an interface circuit. The transceiver circuit, interface, or interface circuit for implementing receiving and sending functions may be separate or integrated. The above transceiver circuit, interface, or interface circuit may be used for reading/writing code/data or for transmitting/passing signals.

In an embodiment, the processor 701 may store a computer program 703. The computer program 703 runs on the processor 701 to cause the communication apparatus 70 to perform the methods described in the above method embodiments. The computer program 703 may be solidified in the processor 701. In this case, the processor 701 may be implemented by hardware.

In an embodiment, the communication apparatus 70 may include a circuit. The circuit may implement the sending, receiving, or communication functions described in the foregoing method embodiments. The processor and transceiver described in the present invention may be implemented in an integrated circuit (IC), an analog IC, a radio frequency integrated circuit (RFIC), a mixed-signal IC, an application-specific integrated circuit (ASIC), a printed circuit board (PCB), an electronic device, etc. The processor and transceiver may also be manufactured using various IC process technologies, such as complementary metal-oxide-semiconductor (CMOS), N-type metal-oxide-semiconductor (NMOS), P-type metal-oxide-semiconductor (PMOS), bipolar junction transistor (BJT), bipolar CMOS (BiCMOS), silicon germanium (SiGe), gallium arsenide (GaAs), etc.

The communication apparatus described in the above embodiments may be a terminal, but the scope of the communication apparatus described in the present invention is not limited thereto, and the structure of the communication apparatus is not limited by FIG. 7. The communication apparatus may be an independent device or part of a larger device. For example, the communication apparatus may be:
(1) an independent integrated circuit (IC), chip, chip system, or subsystem;
(2) a set of one or more ICs, optionally, the set of ICs may also include storage components for storing data and computer programs;
(3) an ASIC, such as a modem;
(4) a module embedded in other devices;
(5) a receiver, terminal, smart terminal, cellular phone, wireless device, handset, mobile unit, vehicle-mounted device, network device, cloud device, artificial intelligence device, etc.;
(6) Others.

Those skilled in the art may also understand that the various illustrative logical blocks and steps listed in the embodiments of the present invention may be implemented by electronic hardware, computer software, or a combination of both. Whether such functions are implemented by hardware or software depends on the specific application and design requirements of the entire system. Those skilled in the art may use various methods to implement the described functions for each specific application, but such implementation should not be understood as beyond the scope of protection of the embodiments of the present invention.

The present invention also provides a computer-readable storage medium having instructions stored thereon. When the instructions are executed by a computer, the functions of any of the above method embodiments are implemented.

The present invention also provides a computer program product. When the computer program product is executed by a computer, the functions of any of the above method embodiments are implemented.

In the above embodiments, the methods may be implemented entirely or partially by software, hardware, firmware, or any combination thereof. When implemented by software, the methods may be implemented entirely or partially in the form of a computer program product. The computer program product includes one or more computer programs. When the computer programs are loaded and executed on a computer, all or part of the procedures or functions described in the embodiments of the present invention are generated. The computer may be a general-purpose computer, a special-purpose computer, a computer network, or another programmable device. The computer programs may be stored in a computer-readable storage medium or transmitted from one computer-readable storage medium to another. For example, the computer programs may be transmitted from a website, computer, server, or data center to another website, computer, server, or data center via wired (e.g., coaxial cable, optical fiber, digital subscriber line (DSL)) or wireless (e.g., infrared, wireless, microwave, etc.) means. The computer-readable storage medium may be any available medium that can be accessed by a computer or a data storage device such as a server or data center integrated with one or more available media. The available medium may be a magnetic medium (e.g., floppy disk, hard disk, magnetic tape), an optical medium (e.g., digital video disc (DVD)), or a semiconductor medium (e.g., solid-state disk (SSD)), etc.

Those of ordinary skill in the art may understand that the numbers such as "first" and "second" involved in the present invention are only used for distinguishing descriptions and do not limit the scope of the embodiments of the present invention or indicate a sequence.

In the present invention, "at least one" may also be described as "one or more," and "multiple" may be two, three, four, or more, which is not limited in the present invention. In the embodiments of the present invention, for a technical feature, terms such as "first," "second," "third," "A," "B," "C," and "D" are used to distinguish the technical features, and there is no sequential or size order among the technical features described by "first," "second," "third," "A," "B," "C," and "D."

The corresponding relationships shown in the tables in the present invention may be configured or predefined. The values of the information in the tables are only examples and may be configured as other values, which are not limited in the present invention. When configuring the corresponding relationships between configuration information and parameters, it is not necessary to configure all the corresponding relationships shown in the tables. For example, in the tables of the present invention, some rows showing corresponding relationships may not be configured. Alternatively, appropriate adjustments may be made to the above tables, such as splitting, merging, etc. The names of the parameters shown in the titles of the above tables may also be other names understandable by the communication apparatus, and the values or representations of the parameters may also be other values or representations understandable by the communication apparatus. The above tables may also be implemented using other data structures, such as arrays, queues, containers, stacks, linear lists, pointers, linked lists, trees, graphs, structures, classes, heaps, hash tables, etc.

In the present invention, "predefined" may be understood as defined, predefined, stored, pre-stored, pre-negotiated, pre-configured, solidified, or pre-burned.

Those of ordinary skill in the art may realize that the units and algorithm steps of the examples described in the embodiments disclosed herein may be implemented by electronic hardware, computer software, or a combination of both. Whether these functions are implemented by hardware or software depends on the specific application and design constraints of the technical solution. Professionals may use different methods for each specific application to implement the described functions, but such implementation should not be considered beyond the scope of the present invention.

Those skilled in the art may clearly understand that, for the convenience and conciseness of description, the specific working processes of the systems, apparatuses, and units described above may refer to the corresponding processes in the foregoing method embodiments, and details are not repeated here.

The above are only specific implementations of the present invention, but the scope of protection of the present invention is not limited thereto. Any person skilled in the art can easily think of changes or substitutions within the technical scope disclosed in the present invention, which should be covered by the scope of protection of the present invention. Therefore, the scope of the present invention shall be subject to the scope of the claims.

## Claims

1. A method for exchanging auxiliary information, performed by a first terminal, comprising:
obtaining first auxiliary information; and
sending the first auxiliary information to a second terminal, wherein the first auxiliary information is used to assist the second terminal and/or a first serving network device of the second terminal in performing a Quality of Service (QoS) allocation on a first PC5 link and a second PC5 link;
wherein the first PC5 link is a PC5 unicast link between the first terminal and the second terminal, the second PC5 link is a PC5 unicast link between the first terminal and a third terminal, and an end-to-end connection between the second terminal and the third terminal is established via the first terminal.

2. The method according to claim 1, wherein the first auxiliary information comprises at least one of:
a measurement report of sidelink (SL) between the first terminal and the second terminal;
a measurement report of channel busy ratio (CBR) between the first terminal and the second terminal;
a measurement report of SL between the first terminal and the third terminal;
a measurement report of CBR between the first terminal and the third terminal;
transmission delay information of SL between the first terminal and the second terminal detected by the first terminal; or
transmission delay information of SL between the first terminal and the third terminal detected by the first terminal.

3. The method according to claim 1 or 2, wherein sending the first auxiliary information to the second terminal comprises:
sending the first auxiliary information to the second terminal in response to receiving an auxiliary information request indication from the second terminal, wherein the auxiliary information request indication is used to instruct the first terminal to trigger a reporting of the first auxiliary information; or
sending the first auxiliary information to the second terminal for the first time in a case where the first terminal determines that an establishment of the end-to-end connection between the second terminal and the third terminal is complete, or sending the first auxiliary information to the second terminal in a case where the first auxiliary information changes relative to first auxiliary information sent last time; or
sending the first auxiliary information to the second terminal based on an implementation of the first terminal.

4. A method for exchanging auxiliary information, performed by a second terminal, comprising:
receiving first auxiliary information sent by a first terminal;
wherein the first auxiliary information is used for a Quality of Service (QoS) allocation on a first PC5 link and a second PC5 link;
the first PC5 link is a PC5 unicast link between the first terminal and the second terminal, the second PC5 link is a PC5 unicast link between the first terminal and a third terminal, and an end-to-end connection between the second terminal and the third terminal is established via the first terminal.

5. The method according to claim 4, further comprising:
sending an auxiliary information request indication to the first terminal, wherein the auxiliary information request indication is used to instruct the first terminal to trigger a reporting of the auxiliary information.

6. The method according to claim 4 or 5, further comprising:
performing the QoS allocation on the first PC5 link and the second PC5 link according to the first auxiliary information.

7. The method according to claim 4 or 5, further comprising:
sending the first auxiliary information to a first serving network device of the second terminal, wherein the first auxiliary information is used to assist the first serving network device in performing the QoS allocation on the first PC5 link and the second PC5 link.

8. The method according to any one of claims 4 to 7, wherein the first auxiliary information comprises at least one of:
a measurement report of sidelink (SL) between the first terminal and the second terminal;
a measurement report of channel busy ratio (CBR) between the first terminal and the second terminal;
a measurement report of SL between the first terminal and the third terminal;
a measurement report of CBR between the first terminal and the third terminal;
transmission delay information of SL between the first terminal and the second terminal detected by the first terminal; or
transmission delay information of SL between the first terminal and the third terminal detected by the first terminal.

9. A method for exchanging auxiliary information, performed by a first terminal, comprising:
receiving second auxiliary information, wherein the second auxiliary information is sent by a second terminal or a third terminal;
wherein the second auxiliary information is used for a Quality of Service (QoS) allocation on a first PC5 link and a second PC5 link;
the first PC5 link is a PC5 unicast link between the first terminal and the second terminal, the second PC5 link is a PC5 unicast link between the first terminal and the third terminal, and an end-to-end connection between the second terminal and the third terminal is established via the first terminal.

10. The method according to claim 9, wherein
the second auxiliary information is sent by the second terminal, and the second auxiliary information comprises: end-to-end QoS information for one or more sidelink data radio bearers (SL-DRBs) from the second terminal to the third terminal;
the second auxiliary information is sent by the third terminal, and the second auxiliary information comprises: end-to-end QoS information for one or more SL-DRBs from the third terminal to the second terminal.

11. The method according to claim 10, wherein the QoS information comprises at least one of:
PC5 QoS identifier (PQI);
priority;
packet delay budget (PDB); or
packet error rate (PER).

12. The method according to any one of claims 9 to 11, further comprising:
sending an auxiliary information request indication to the second terminal and/or the third terminal, wherein the auxiliary information request indication is used to instruct the second terminal and/or the third terminal to trigger a reporting of the second auxiliary information.

13. The method according to any one of claims 9 to 12, further comprising:
performing the QoS allocation on the first PC5 link and the second PC5 link according to the second auxiliary information.

14. The method according to any one of claims 9 to 12, further comprising:
sending the second auxiliary information to a second serving network device of the first terminal, wherein the second auxiliary information is used to assist the second serving network device in performing the QoS allocation on the first PC5 link and the second PC5 link.

15. A method for exchanging auxiliary information, comprising:
sending second auxiliary information to a first terminal, wherein the second auxiliary information is used to assist the first terminal and/or a second serving network device of the first terminal in performing a Quality of Service (QoS) allocation on a first PC5 link and a second PC5 link;
wherein the first PC5 link is a PC5 unicast link between the first terminal and a second terminal, the second PC5 link is a PC5 unicast link between the first terminal and a third terminal; and an end-to-end connection between the second terminal and the third terminal is established via the first terminal.

16. The method according to claim 15, wherein the method is performed by the second terminal, and sending the second auxiliary information to the first terminal comprises:
sending the second auxiliary information to the first terminal in response to receiving an auxiliary information request indication sent by the first terminal, wherein the auxiliary information request indication is used to instruct the second terminal to trigger a reporting of the second auxiliary information; or
sending the second auxiliary information to the first terminal for the first time in a case where the second terminal determines that an establishment of the end-to-end connection between the second terminal and the third terminal is complete, or sending the second auxiliary information to the first terminal in a case where the second auxiliary information changes relative to second auxiliary information sent last time; or
sending the second auxiliary information to the first terminal based on an implementation of the second terminal.

17. The method according to claim 16, wherein the second auxiliary information comprises end-to-end QoS information for one or more sidelink data radio bearers (SL-DRBs) from the second terminal to the third terminal.

18. The method according to claim 15, wherein the method is performed by the third terminal, and sending the second auxiliary information to the first terminal comprises:
sending the second auxiliary information to the first terminal in response to receiving an auxiliary information request indication sent by the first terminal, wherein the auxiliary information request indication is used to instruct the third terminal to trigger a reporting of the second auxiliary information; or
sending the second auxiliary information to the first terminal for the first time in a case where the third terminal determines that an establishment of the end-to-end connection between the second terminal and the third terminal is complete, or sending the second auxiliary information to the first terminal in a case where the second auxiliary information changes relative to second auxiliary information sent last time; or
sending the second auxiliary information to the first terminal based on an implementation of the third terminal.

19. The method according to claim 18, wherein the second auxiliary information comprises end-to-end QoS information for one or more SL-DRBs from the third terminal to the second terminal.

20. The method according to claim 17 or 19, wherein the QoS information comprises at least one of:
PC5 QoS identifier (PQI);
priority;
packet delay budget (PDB); or
packet error rate (PER).

21. A communication apparatus, configured in a first terminal, comprising:
a processing module configured to obtain first auxiliary information; and
a transceiving module configured to send the first auxiliary information to a second terminal, wherein the first auxiliary information is used to assist the second terminal and/or a first serving network device of the second terminal in performing a Quality of Service (QoS) allocation on a first PC5 link and a second PC5 link;
wherein the first PC5 link is a PC5 unicast link between the first terminal and the second terminal, the second PC5 link is a PC5 unicast link between the first terminal and a third terminal, and an end-to-end connection between the second terminal and the third terminal is established via the first terminal.

22. A communication apparatus, configured in a second terminal, comprising:
a transceiving module configured to receive first auxiliary information sent by a first terminal;
wherein the first auxiliary information is used for a Quality of Service (QoS) allocation on a first PC5 link and a second PC5 link;
the first PC5 link is a PCS unicast link between the first terminal and the second terminal, the second PC5 link is a PC5 unicast link between the first terminal and a third terminal, and an end-to-end connection between the second terminal and the third terminal is established via the first terminal.

23. A communication apparatus, configured in a first terminal, comprising:
a transceiving module configured to receive second auxiliary information, wherein the second auxiliary information is sent by a second terminal or a third terminal;
wherein the second auxiliary information is used for a Quality of Service (QoS) allocation on a first PC5 link and a second PC5 link;
the first PC5 link is a PC5 unicast link between the first terminal and the second terminal, the second PC5 link is a PC5 unicast link between the first terminal and the third terminal, and an end-to-end connection between the second terminal and the third terminal is established via the first terminal.

24. A communication apparatus, comprising:
a transceiving module configured to send second auxiliary information to a first terminal, wherein the second auxiliary information is used to assist the first terminal and/or a second serving network device of the first terminal in performing a Quality of Service (QoS) allocation on a first PC5 link and a second PC5 link;
wherein the first PC5 link is a PC5 unicast link between the first terminal and a second terminal, the second PC5 link is a PC5 unicast link between the first terminal and a third terminal; and an end-to-end connection between the second terminal and the third terminal is established via the first terminal.

25. A communication apparatus, comprising a processor and a memory, wherein a computer program is stored in the memory, and the processor executes the computer program stored in the memory to cause the apparatus to perform the method according to any one of claims 1 to 3.

26. A communication apparatus, comprising a processor and a memory, wherein a computer program is stored in the memory, and the processor executes the computer program stored in the memory to cause the apparatus to perform the method according to any one of claims 4 to 8.

27. A communication apparatus, comprising a processor and a memory, wherein a computer program is stored in the memory, and the processor executes the computer program stored in the memory to cause the apparatus to perform the method according to any one of claims 9 to 14.

28. A communication apparatus, comprising a processor and a memory, wherein a computer program is stored in the memory, and the processor executes the computer program stored in the memory to cause the apparatus to perform the method according to any one of claims 15 to 20.

29. A computer-readable storage medium having stored therein instructions that, when executed, causes the method according to any one of claims 1 to 3 to be implemented.

30. A computer-readable storage medium having stored therein instructions that, when executed, causes the method according to any one of claims 4 to 8 to be implemented.

31. A computer-readable storage medium having stored therein instructions that, when executed, causes the method according to any one of claims 9 to 14 to be implemented.

32. A computer-readable storage medium having stored therein instructions that, when executed, causes the method according to any one of claims 15 to 20 to be implemented.
